# EUROPEAN PATENT APPLICATION

(11) **EP 2 505 402 A1**
(43) Date of publication of application: **03.10.2012**
(21) Application number: 12161593.4
(22) Date of filing: 27.03.2012
(51) Int. Cl.: B60J 10/12

(54) **Panel structure of sunroof**

(30) Priority: 28.03.2011 JP 2011070380
(71) Applicant: Aisin Seiki Kabushiki Kaisha, Aichi-ken 448-8650 (JP)
(72) Inventor: Motomura, Shota, KARIYA-SHI, AICHI-KEN, 448-8650 (JP); Nagashima, Youji, KARIYA-SHI, AICHI-KEN, 448-8650 (JP); Abe, Masahiko, KARIYA-SHI, AICHI-KEN, 448-0027 (JP)
(74) Representative: Intès, Didier Gérard André

(57) **Abstract**

A panel structure of a sunroof, includes a roof panel (21) for opening and closing an opening (11) of a vehicle roof (10), an inner panel (23) fixedly attached to a bottom surface of a rrof panel along a first outer peripheral portion (21a) of the roof panel, an engaging recessed portion (31) provided at the inner panel and curved in a downward direction along the first peripheral portion, a second outer peripheral portion (32) provided at the inner panel and positioned the roof while being apart from the roof panel and being directed toward an edge portion (11a) of the opening, a weather strip (24) mounted on the first outer peripheral portion, an engaging protruding portion (42) provided at the weather strip, and a seal portion (46) provided at the weather strip and being elastically contactable with the edge portion.

## Description

### TECHNICAL FIELD

This disclosure generally relates to a panel structure of a sunroof.

### BACKGROUND DISCUSSION

A known panel structure of a sunroof is disclosed in JP2004-243792A (hereinafter referred to as Patent reference 1). The known panel structure of the sunroof disclosed in the Patent reference 1 includes a roof panel made of glass material, a rim made of resin material and mounted on an outer peripheral edge of the roof panel along an entire circumference of the roof panel, and a weather strip made of an elastic material and formed into a frame-like shape, which is attached to an outer peripheral edge of the rim along an entire circumference of the rim. In addition, in this case, it is assumed that an inner panel made from metal plate and formed into a frame-like shape is attached to the outer peripheral edge of the roof panel or to the outer peripheral edge of the rim along the entire circumference thereof. The inner panel connects the roof panel to a function bracket related to an opening and closing operation of the roof panel. In other words, the known panel structure of the sunroof is constituted by four components, that is, the roof panel, the rim, the weather strip and the inner panel. This leads to an increase in the number of the components, resulting in a cost increase.

Another known panel structure is disclosed in JP2003-094953A (hereinafter referred to as Patent reference 2). In the Patent reference 2, the panel structure which is constituted by three components and does not include a rim is suggested. According to the panel structure of the Patent reference 2, a vertical flange is provided at a peripheral edge of an inner panel. A weather strip is mounted on the roof panel by inserting the weather strip between the roof panel and the inner panel while having the vertical flange fitted and held in a groove provided at of the weather strip.

The known panel structure of the sunroof disclosed in the Patent reference 2 does not include the rim, and thus the vertical flange of the inner panel may need to be arranged outwardly relative to an outline (an outer peripheral edge) of the roof panel in order to mount the weather strip on the inner panel. Therefore, the weather strip may need to be configured so that a sufficient length of the weather strip extends from the outer peripheral edge of the roof panel. In this case, consumption of material for forming the weather strip increases. Further, in a case where the increased length of the weather strip extends from the outer peripheral edge of the roof panel, flapping may occur to the entire weather strip at corner portions where the weather strip is bent to form the frame-like shape. Consequently, the corner portions may need to be formed in a manner that the aforementioned flapping does not occur, which may increase a manufacturing workload. As described above, the increase in the consumption of the material of the weather strip and in the manufacturing workload results in a cost increase.

A need thus exists for a panel structure of a sunroof, where a length of a weather strip extending from an outer peripheral end of a roof panel is reduced without increasing the number of components.

### SUMMARY

According to an aspect of this disclosure, a panel structure of a sunroof includes a roof panel for opening and closing an opening of a vehicle roof, an inner panel made from steel plate and fixedly attached to a bottom surface of the roof panel along a first outer peripheral portion of the roof panel, an engaging recessed portion provided at the inner panel and is curved in a downward direction along the first outer peripheral portion of the roof panel, a second outer peripheral portion provided at the inner panel and connected to the engaging recessed portion, the second outer peripheral portion is positioned below the roof panel while being apart from the roof panel and being directed toward an edge portion of the opening, a weather strip mounted on the first outer peripheral portion of the roof panel, an engaging protruding portion provided at the weather strip, the engaging protruding portion is sandwiched and held by the first outer peripheral portion of the roof panel and by the second outer peripheral portion of the inner panel along the first outer peripheral portion of the roof panel, and is engaged with the engaging recessed portion, and a seal portion provided at the weather strip and being elastically contactable with the edge portion of the opening.

According to the above-described structure, the panel structure of the sunroof is constituted by three components, that is, the roof panel, the weather strip and the inner panel, and therefore the number of components is reduced. Further, the inner panel supports and secures the weather strip in a manner that the engaging protruding portion is sandwiched and held between the second outer peripheral portion of the inner panel and the first outer peripheral portion of the roof panel, and that the engaging protruding portion is engaged with the engaging recessed portion. Consequently, a position of an outer peripheral edge of the inner panel is less restricted by a position of an outer peripheral edge of the roof panel. Therefore, a length of a portion of the weather strip, the portion which extends from the outer peripheral edge of the roof panel toward the edge portion of the opening, is reduced. This reduces consumption of material for forming the weather strip. Further, shape and configuration of the weather strip may be simplified as a whole, thereby reducing manufacturing workload.

According to the above-described structure, the length of the weather strip extending from the outer peripheral edge of the roof panel is reduced without increasing the number of the components.

According to another aspect of this disclosure, the panel structure of the sunroof further includes an inclined portion provided at the engaging recessed portion of the inner panel and causing a component force to be generated. The component force moves the weather strip in a direction in which the engaging protruding portion is engaged with the engaging recessed portion in a case where the engaging protruding portion is pressed downwardly via the roof panel.

According to the above-described structure, in a case where the roof panel is fixedly attached onto the inner panel in a state where the weather strip (the engaging protruding portion) is placed on and is temporarily mounted on the second outer peripheral portion of the inner panel, the engaging protruding portion is pressed downwardly via the roof panel. As a result, the component force for moving the weather strip in the direction in which the engaging protruding portion is engaged with the engaging recessed portion is generated at the engaging recessed portion. Thus, even in a case where the weather strip is temporarily mounted and where the engaging protruding portion is not completely engaged with the engaging recessed portion, the aforementioned component force, which is generated when the roof panel is fixedly attached onto the inner panel, allows the engagement between the engaging protruding portion and the engaging recessed portion to be completed.

According to a further aspect of this disclosure, the panel structure of the sunroof further includes a holding portion provided at the weather strip and holding the second outer peripheral portion of the inner panel between the holding portion and the engaging protruding portion.

According to the above-described structure, because the second outer peripheral portion of the inner panel is sandwiched and held between the engaging protruding portion and the holding portion, the weather strip is temporarily mounted on the inner panel in a simple way during assembly of the panel structure. Further, also after the assembly of the panel structure is completed, it is restricted that the weather strip detaches from, for example, the inner panel.

According to a further aspect of this disclosure, the panel structure of the sunroof further includes a cover portion provided at the weather strip and covering an upper surface of the first outer peripheral portion of the roof panel, wherein the seal portion of the weather strip and a design surface of the cover portion which is connected to the seal portion are made of foamed material, and the engaging protruding portion of the weather strip and a back surface of the cover portion which is connected to the engaging protruding portion are made of resin material which is harder than the foamed material.

According to the above-described structure, the design surface of the cover portion and the seal portion are made of the foamed material, and thus an integrated appearance between the design surface of the cover portion and the seal portion is enhanced, and an aesthetic quality improves. On the other hand, because the back surface of the cover portion and the engaging protruding portion are made of the resin material which is harder than the foamed material, rigidity of the cover portion increases compared to a case where, for example, the cover portion is entirely made of the foamed material. Thus, even in a case where the roof panel is fixedly attached onto the inner panel in a state where the weather strip (the engaging protruding portion) is placed on and temporarily mounted on the second outer peripheral portion of the inner panel, even if the cover portion that is pressed by the first outer peripheral portion of the roof panel is caused to bend by a pressing force, the cover portion is pulled back smoothly so that the cover portion covers the upper surface of the first outer peripheral portion of the roof panel because the rigidity of the cover portion is appropriately maintained.

According to a further aspect of this disclosure, the panel structure of the sunroof further includes a lip portion provided at the weather strip and standing from an upper surface of the engaging protruding portion. The lip portion is configured to be elastically in contact with a bottom surface of the roof panel along the first outer peripheral portion of the roof panel.

According to the above-described structure, because the weather strip, at the lip portion, is elastically in contact with the bottom surface of the roof panel along the first outer peripheral portion of the roof panel, water which enters an outer peripheral edge of the upper surface of the engaging protruding portion is restricted from entering onto the inner panel (the engaging recessed portion) from an inner peripheral edge of the upper surface of the engaging protruding portion. As a result, corrosion-preventive performance of the inner panel improves.

According to a further aspect of this disclosure, the panel structure of the sunroof further includes a recessed portion provided at the weather strip and allowing the lip portion to be folded down.

According to the above-described structure, because the recessed portion allows the lip portion to be folded down, the panel structure is manufactured to be thinner.

According to a further aspect of this disclosure, the lip portion is folded down toward a vehicle outer side.

According to the above-described structure, the water-tightness improves compared to a case where the lip portion is folded down toward a vehicle inner side.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a plan view illustrating a panel structure of a sunroof according to an embodiment disclosed here;

Fig. 2 is a cross-sectional view taken along line II-II in Fig. 1; and

Fig. 3 is a cross-sectional view illustrating a weather strip according to the embodiment.

### DETAILED DESCRIPTION

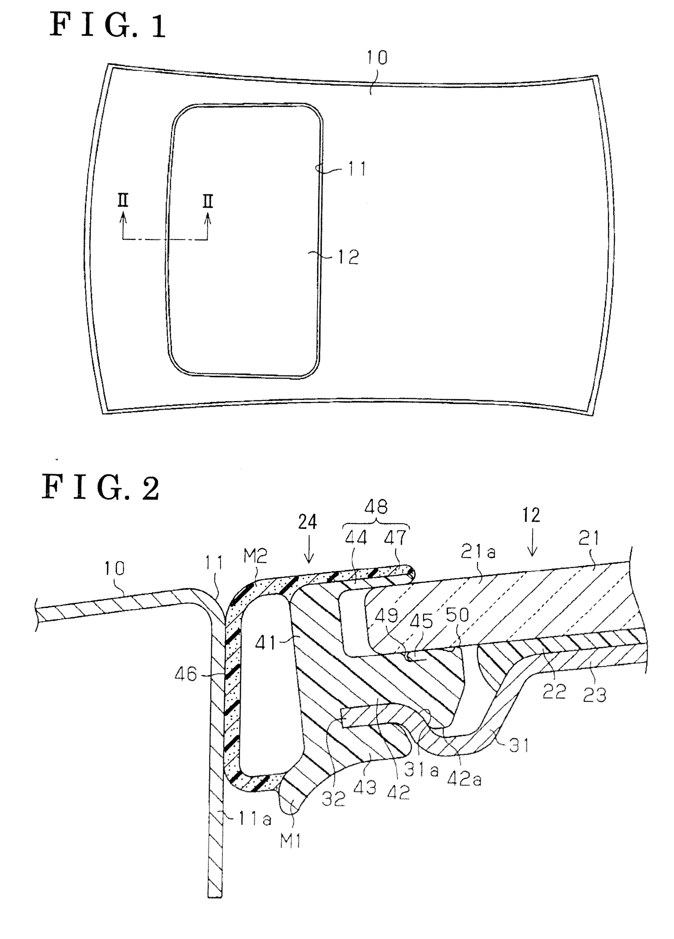

A panel structure of a sunroof according to an embodiment will be explained with reference to Figs. 1 to 3. As shown in Fig. 1, a vehicle roof 10 of, for example, an automobile is provided with an opening 11 formed into a substantially rectangular shape. The vehicle roof 10 is also provided with a panel 12 for the vehicle (hereinafter referred to also as the panel 12) formed into a substantially rectangular shape and is configured to open and close the opening 11.

As shown in Fig. 2, the opening 11 includes an edge portion 11 a formed by bending an inner side of the opening 11 (that is, an edge of the vehicle roof 10 defining the opening 11) in a downward direction. Thus, the edge portion 11 a of the opening 11 presents a substantially rectangular tubular shape as a whole. On the other hand, the panel 12 is provided with a roof panel 21 made of, for example, glass and formed into a substantially rectangular shaped plate so as to match a configuration of the edge portion 11 a. The roof panel 21 opens and closes the opening 11. The panel 12 is also provided with an inner panel 23 made from steel plate into a substantially rectangular frame-like shape. The inner panel 23 is fixedly attached to a bottom surface of the roof panel 21 with, for example, an adhesive agent 22 made of urethane resin, along a first outer peripheral portion 21a of the roof panel 21. The inner panel 23 connects the roof panel 21 (the panel 12 for the vehicle) to a function bracket that is configured to open and close the roof panel 21 (the panel 12 for the vehicle). The inner panel 23 includes an engaging recessed portion 31 defined by curving the inner panel 23 in the downward direction and positioned below the first outer peripheral portion 21a of the roof panel 21 along an entire circumference of the first outer peripheral portion 21 a. The inner panel 23 also includes a second outer peripheral portion 32 connected to the engaging recessed portion 31 and positioned below the first outer peripheral portion 21 a of the roof panel 21 while being apart from the roof panel 21. The second outer peripheral portion 32 is directed toward the edge portion 11 a of the opening 11. Thus, the engaging recessed portion 31 is curved in a direction in which a gap, that is, a distance between the engaging recessed portion 31 and the roof panel 21 increases. A portion at which the engaging recessed portion 31 is connected to the second outer peripheral portion 32 defines an inclined portion 31 a that gradually rises upwardly toward an outer side of the inner panel 23. The adhesive agent 22 is generally applied to be positioned closer to a base end of the inner panel 23, that is, closer to a center of the vehicle.

Further, the panel 12 includes a weather strip 24 formed into a substantially rectangular ring shape and mounted on the first outer peripheral portion 21 a of the roof panel 21. The weather strip 24 includes a body portion 41 formed into a belt shape and surrounding the first outer peripheral portion 21 a of the roof panel 21, and an engaging protruding portion 42 extending from the body portion 41 along the bottom surface of the first outer peripheral portion 21a toward the first outer peripheral portion 21a. The engaging protruding portion 42 includes a cross section formed into a substantially hooked shape. The engaging protruding portion 42 extends along an entire circumference of the body portion 41 (the first outer peripheral portion 21 a), and includes an engaging portion 42a curved and extending in the downward direction and facing the engaging recessed portion 31. The engaging portion 42a is in contact with the inclined portion 31 a of the engaging recessed portion 31 so that the weather strip 24 is restricted from moving toward an outer peripheral direction thereof. In other words, the weather strip 24 is supported by and secured to the inner panel 23 and to other components by utilizing a room, which is provided between the roof panel 21 and the inner panel 23, and which extends inwardly, in a manner that the engaging protruding portion 42 is sandwiched and held between the roof panel 21 and the inner panel 23.

Further, the weather strip 24 includes a holding portion 43 formed below the engaging protruding portion 42 into a flange shape and extending from the body portion 41 toward the second outer peripheral portion 32 along the bottom surface of the second outer peripheral portion 32 of the inner panel 23 while being apart from the engaging protruding portion 42. The holding portion 43 extends along the entire circumference of the body portion 41, and sandwiches and holds the second outer peripheral portion 32 between the holding portion 43 and the engaging protruding portion 42. In other words, the weather strip 24 is supported by and secured to the second outer peripheral portion 32 (the inner panel 23) in a manner that the second outer peripheral portion 32 of the inner panel 23 is sandwiched and held between the engaging protruding portion 42 and the holding portion 43 along the entire circumference of the weather strip 24.

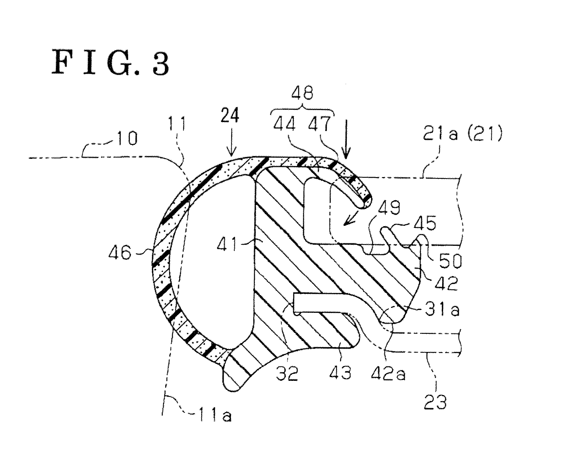

Further, the weather strip 24 includes a back surface-side cover portion 44 formed into a flange shape and extending from an upper edge portion of the body portion 41 toward the first outer peripheral portion 21 a along an upper surface of the first outer peripheral portion 21 a. Thus, the weather strip 24 is supported by and secured to the first outer peripheral portion 21 a (the roof panel 21) in a manner that the first outer peripheral portion 21 a is sandwiched and held between the engaging protruding portion 42 and the back surface-side cover portion 44 along the entire circumference of the weather strip 24. As illustrated in Fig. 3, the weather strip 24 includes a lip portion 45 formed along an entire circumference of the engaging protruding portion 42 so as to stand from an upper surface of the engaging protruding portion 42. As illustrated in Fig. 3, in a state where the roof panel 21 is not mounted on the weather strip 24, the lip portion 45 is inclined toward a vehicle outer side, that is, the outer side of the vehicle on which the panel structure of the sunroof is mounted, and in a state where, for example, the roof panel 21 is mounted on the weather strip 24 as illustrated in Fig. 2, the lip portion 45 is folded down, that is, pushed down toward the vehicle outer side so as to be in contact with the roof panel 21. A recessed portion 49 which allows the lip portion 45 to be folded down is formed on the upper surface of the engaging protruding portion 42, to be positioned closer to the vehicle outer side relative to the lip portion 45. As illustrated in Fig. 2, in a state where the lip portion 45 is pressed by the bottom surface of the roof panel 21, which is, for example, mounted on the engaging protruding portion 42, the lip portion 45 is folded down and is elastically in contact with the bottom surface of the roof panel 21.

At the upper surface of the engaging protruding portion 42, a sub lip 50 is formed at a vehicle inner side relative to the lip portion 45 so as to protrude in an upward direction. As illustrated in Fig. 2, the sub lip 50 is pressed by the bottom surface of the roof panel 21, which is, for example, mounted on the engaging protruding portion 42, and is elastically in contact with the bottom surface of the roof panel 21.

The body portion 41, the engaging protruding portion 42, the holding portion 43, the surface-side cover portion 44, the lip portion 45 and the sub lip 50 are made of resin material M1, which is a hard resin material. On the other hand, the weather strip 24 includes a portion 46, which is formed to have a cross section of a substantially arc shape, connected to the upper edge portion and to a lower edge portion of the body portion 41, and protrude toward the edge portion 11a of the opening 11. The seal portion 46 extends along the entire circumference of the body portion 41 and is elastically in contact with the edge portion 11 a which the seal portion 46 faces. Further, the weather strip 24 includes a design surface-side cover portion 47 formed into a flange shape and extending toward the first outer peripheral portion 21 a of the roof panel 21 along an upper surface of the body portion 41 and along an upper surface of the back surface-side cover portion 44. The design surface-side cover portion 47 and the seal portion 46 are made of foamed material M2, which is softer than the resin material M1. By using the identical material (the foamed material M2) for forming the design surface-side cover portion 47 and the seal portion 46, the design surface-side cover portion 47 may present an enhanced integrated appearance with the seal portion 46, which improves an aesthetic quality. The design surface-side cover portion 47 and the back surface-side cover portion 44 constitute a cover portion 48.

In other words, the weather strip 24 is made of the resin material M1 and the foamed material M2 by a double-molding process. Specifically, the cover portion 48 is constituted by the back surface-side cover portion 44 and the design surface-side cover portion 47, which are made of different materials from each other and joined to each other to form a layer in order to favorably assure rigidity of the cover portion 48 without sacrificing a design performance thereof.

Here, an assembly method of the panel 12 will be explained. First, the weather strip 24 is mounted on the inner panel 23 from an outside (that is, an outer peripheral side) of the second outer peripheral portion 32 so that the second outer peripheral portion 32 is sandwiched and held between the engaging protruding portion 42 and the holding portion 43 as illustrated in Fig. 3. Thus, a position of the weather strip 24 (the engaging protruding portion 42) is set relative to the second outer peripheral portion 32 in a manner that the engaging portion 42a, which enters and reaches the engaging recessed portion 31, is engaged with the inclined portion 31a of the engaging recessed portion 31. In the aforementioned way, the weather strip 24 is placed on and temporarily mounted on the second outer peripheral portion 32 of the inner panel 23.

Next, the adhesive agent 22 is applied on an upper surface of part of the inner panel 23, the part which is closer to an inner peripheral portion relative to the engaging recessed portion 31, and the roof panel 21 is mounted from above the inner panel 23. At this time, the engaging protruding portion 42, on which the roof panel 21 is placed, serves as a spacer interposed between the inner panel 23 and the roof panel 21 fixedly attached to the inner panel 23 via the adhesive agent 22. Further, the engaging protruding portion 42 is pressed downwardly by the roof panel 21, and thus a component force that moves the weather strip 24 in a direction in which the engaging protruding portion 42 engages with the second outer peripheral portion 32 (that is, toward an inner peripheral side) is generated at the inclined portion 31a with which the engaging portion 42a is in contact. Thus, even in a case where the weather strip 24 is temporarily mounted on the second outer peripheral portion 32 and where the engaging protruding portion 42 is not completely engaged with the engaging recessed portion 31, the aforementioned component force that is generated when the roof panel 21 is fixedly attached onto the inner panel 23 allows the engaging portion 42a to slide along the inclined portion 31 a, and thus the engagement between the engaging protruding portion 42 and the engaging recessed portion 31 is completed. Consequently, the second outer peripheral portion 32 is appropriately sandwiched and held between the engaging protruding portion 42 and the holding portion 43.

On the other hand, the cover portion 48 is pressed by the first outer peripheral portion 21a of the roof panel 21, and therefore bends about a base end of the cover portion 48 (that is, the portion at which the cover portion 48 is connected to the body portion 41) toward the body portion 41. In other words, the cover portion 48 is deformed so as to be received between the body portion 41 and the roof panel 21. Thus, the roof panel 21 is evenly biased by the cover portion 48 at the first outer peripheral portion 21a toward a center of the roof panel 21 so as to be correctly positioned relative to the inner panel 23 and to other components. Next, the roof panel 21 is fixedly mounted on the inner panel 23. Thus, the lip portion 45, which is pressed by the bottom surface of the roof panel 21 (the first outer peripheral portion 21 a) that is mounted on the engaging protruding portion 42, comes to be folded down and elastically comes to contact with the bottom surface of the roof panel 21.

After this, the cover portion 48, which is folded and is bent toward the body portion 41, is pulled out, that is, pulled back above the upper surface of the roof panel 21, by using an appropriate jig, and thus the upper surface of the first outer peripheral portion 21a of the roof panel 21 is covered with the cover portion 48. At this time, the aforementioned operation of pulling out the cover portion 48 is performed smoothly because the cover portion 48 is made of the resin material M1 and the foamed material M2 by the double-molding process, and thus the cover portion 48 maintains an appropriate rigidity.

Next, an operation of the embodiment will be explained, In a state where the opening 11 is covered with the panel 12 for the vehicle and is closed, the seal portion 46 of the weather strip 24 is elastically in contact with the edge portion 11a of the opening 11, and thus water-tightness against ingress of water toward a vehicle interior side is ensured. On the other hand, the cover portion 48 is elastically in contact with the upper surface of the first outer peripheral portion 21a of the roof panel 21 and the lip portion 45 is elastically in contact with the bottom surface of the first outer peripheral portion 21a, and thus water-tightness against ingress of water toward the engaging recessed portion 31 is ensured.

According to the embodiment described in detail above, the following effects and advantages are attained. (1) According to the embodiment, the panel structure of the sunroof is constituted by three components, that is, the roof panel 21, the weather strip 24 and the inner panel 23, and therefore the number of the components is reduced, and eventually, costs are reduced. Further, the inner panel 23 supports and secures the weather strip 24 in a manner that the engaging protruding portion 42 is sandwiched and held between the second outer peripheral portion 32 of the inner panel 23 and the first outer peripheral portion 21a of the roof panel 21, and that the engaging protruding portion 42 is engaged with the second outer peripheral portion 32 of the inner panel 23. Consequently, a position of an outer peripheral edge of the inner panel 23 is less restricted by a position of an outer peripheral edge (an end portion) of the roof panel 21. Therefore, a length of a portion of the weather strip 24, the portion which extends from the outer peripheral edge of the roof panel 21 toward the edge portion 11a of the opening 11, is reduced. This reduces the consumption of the material for forming the weather strip 24. Further, from the standpoint of a shape and configuration of the weather strip 24, corner portions of the weather strip 24 do not need to be formed in a similar manner to that of a known weather strip, that is, in a manner that flapping does not occur at the corner portions of the weather strip, This may simplify the shape and configuration of the weather strip 24 as a whole, thereby reducing the consumption of the material and manufacturing workload of the weather strip 24. As described above, the costs are reduced as a result of the reduction in the consumption of the material and in the manufacturing workload.

(2) According to the embodiment, in a case where the roof panel 21 is fixedly attached onto the inner panel 23 in a state where the weather strip 24 (the engaging protruding portion 42) is placed on and temporarily mounted on the second outer peripheral portion 32 of the inner panel 23, the engaging protruding portion 42 is pressed downwardly via the roof panel 21. As a result, the component force for moving the weather strip 24 in the direction in which the engaging protruding portion 42 engages with the engaging recessed portion 31 is generated at the inclined portion 31 a. Thus, even in a case where the weather strip 24 is temporarily mounted and where the engaging protruding portion 42 is not completely engaged with the engaging recessed portion 31, the aforementioned component force, which is generated when the roof panel 21 is fixedly attached to the inner panel 23, allows the engaging protruding portion 42 to engage with the engaging recessed portion 31 is completed.

(3) According to the embodiment, a design surface of the cover portion 48 (the design surface-side cover portion 47) and the seal portion 46 are made of the foamed material M2, and thus the integrated appearance between the design surface of the cover portion 48 and the seal portion 46 is enhanced and the aesthetic quality improves. On the other hand, because a back surface of the cover portion 48 (the back surface-side cover portion 44) and, for example, the engaging protruding portion 42 are made of the resin material M1 which is harder than the foamed material M2, the rigidity of the cover portion 48 increases compared to a case where, for example, the cover portion 48 is entirely made of the foamed material M2. Thus, even in a case where the roof panel 21 is fixedly attached onto the inner panel 23 in a state where the weather strip 24 (the engaging protruding portion 42) is placed on and temporarily mounted on the second outer peripheral portion 32 of the inner panel 23, even if the cover portion 48 pressed by the first outer peripheral portion 21a of the roof panel 21 is folded and is bent by the pressing force, the cover portion 48 is pulled back smoothly so that the cover portion 48 covers the upper surface of the first outer peripheral portion 21a of the roof panel 21.

(4) According to the embodiment, because the weather strip 24, at the lip portion 45, is elastically in contact with the bottom surface of the roof panel 21 along the first outer peripheral portion 21a of the roof panel 21, water which enters an outer peripheral edge of the upper surface of the engaging protruding portion 42 is restricted from entering onto the inner panel 23 (the engaging recessed portion 31) from an inner peripheral edge of the upper surface of the engaging protruding portion 42. As a result, corrosion-preventive performance of the inner panel 23 improves. Further, there is no need to additionally provide the weather strip 24 with a sealing material, which reduces the costs.

(5) According to the weather strip 24 of the embodiment, because the second outer peripheral portion 32 of the inner panel 23 is sandwiched and held between the engaging protruding portion 42 and the holding portion 43, the weather strip 24 is temporarily mounted on the inner panel 23 in a simple way during the assembly. Further, also after the assembly of the panel structure is completed, it is restricted that the weather strip 24 detaches from, for example, the inner panel 23.

(6) According to the embodiment, when the roof panel 21 is fixedly attached onto the second outer peripheral portion 32 of the inner panel 23 in a state where the weather strip 24 (the engaging protruding portion 42) is placed on and temporarily mounted on the second outer peripheral portion 32 of the inner panel 23, the cover portion 48 is caused to be folded and bent about the base portion of the cover portion 48 toward the body portion 41. Thus, the first outer peripheral portion 21a of the roof panel 21 is evenly biased by the cover portion 48 so that the roof panel 21 is correctly positioned relative to the inner panel 23 and to other components.

(7) According to the embodiment, the seal portion 46 is formed to have the cross section of the substantially arc shape in a state where the seal portion 46 elastically recovers to an original shape (that is, in a free state). Thus, even in a case, for example, the entire roof panel 21 is formed to be curved to match the design of the vehicle roof 10, the seal portion 46 of the weather strip 24, which is to be mounted on the first outer peripheral portion 21a of the roof panel 21, comes in contact with the edge portion 11a of the opening 11 while remaining in the substantially arc shape, and then comes to be pressed by the edge portion 11a and starts elastically deforming. Consequently, a sealing performance between the weather strip 24 and the edge portion 11a is stabilized along the entire circumference of the weather strip 24.

(8) According to the embodiment, the manufacture of the inner panel 23 is more simplified compared to an inner panel including, for example, a vertical wall portion, and at the same time, a part accuracy is assured. (9) According to the embodiment, because the engaging protruding portion 42 serves as the spacer interposed between the inner panel 23 and the roof panel 21 fixedly attached to the inner panel 23 via the adhesive agent 22, a gap between the roof panel 21 and the inner panel 23 is easily controlled. Further, there is no need to additionally provide a spacer, which reduces the costs.

The aforementioned embodiment may be changed or modified as follows. The weather strip 24 of the embodiment does not need to include the holding portion 43.

The roof panel 21 of the embodiment may be made of synthetic resin (four example, semi-permeable polycarbonate resin), The foamed material M2 of the embodiment may be replaced with soft resin material which is softer than the resin material M1.

According to the embodiment, the edge portion 11a of the opening 11 is formed at the roof panel member, which is a design member of the vehicle roof 10, however, the edge portion 11a may be formed at a reinforcing member reinforcing the roof panel member.

## Claims

1. A panel structure of a sunroof, comprising:
a roof panel (21) for opening and closing an opening (11) of a vehicle roof (10);
an inner panel (23) made from steel plate and fixedly attached to a bottom surface of the roof panel (21) along a first outer peripheral portion (21a) of the roof panel (21);
an engaging recessed portion (31) provided at the inner panel (23), the engaging recessed portion (31) being curved in a downward direction along the first outer peripheral portion (21 a) of the roof panel (21);
a second outer peripheral portion (32) provided at the inner panel (23) and connected to the engaging recessed portion (31), the second outer peripheral portion (32) being positioned below the roof panel (21) while being apart from the roof panel (21) and being directed toward an edge portion (11a) of the opening (11);
a weather strip (24) mounted on the first outer peripheral portion (21 a) of the roof panel (21);
an engaging protruding portion (42) provided at the weather strip (24), the engaging protruding portion (42) being sandwiched and held by first outer peripheral portion (21 a) of the roof panel (21) and by the second outer peripheral portion (32) of the inner panel (23) along the first outer peripheral portion (21 a) of the roof panel (21), and being engaged with the engaging recessed portion (31); and
a seal portion (46) provided at the weather strip (24) and being elastically contactable with the edge portion (11a) of the opening (11).

2. The panel structure of the sunroof according to claim 1, further comprising:
an inclined portion (31a) provided at the engaging recessed portion (31) of the inner panes (23) and causing a component force to be generated, the component force moving the weather strap (24) in a direction in which the engaging protruding portion (42) is engaged with the engaging recessed portion (31) in a case where the engaging protruding portion (42) is pressed downwardly via the roof panel (21).

3. The structure of the sunroof according to either claims 1 or 2, further comprising:
a holding portion (43) provided at the weather strip (24) and holding the second outer peripheral portion (32) of the inner panel (23) between the holding portion (43) and the engaging protruding portion (42).

4. The panel structure of the sunroof according to any one of claims 1 through 3, further comprising:
a cover portion (48) provided at the weather strip (24) and covering an upper surface of the first outer peripheral portion (21 a) of the roof panel (21), wherein
the seal portion (46) of the weather strip (24) and a design surface of the cover portion (48) which is connected to the seal portion (46) are made of foamed material (M2), and
the engaging protruding portion (42) of the weather strip (24) and a back surface of the cover portion (48) which is connected to the engaging protruding portion (42) are made of resin material (M1) which is harder than the foamed material (M2).

5. The panel structure of the sunroof according to any one of claims 1 through 4, further comprising:
a lip portion (45) provided at the weather strip (24) and standing from an upper surface of the engaging protruding portion (42), the lip portion (45) being configured to be elastically in contact with a bottom surface of the roof panel (21) along the first outer peripheral portion (21a) of the roof panel (21).

6. The panel structure of the sunroof according to claim 5, further comprising:
a recessed portion (49) provided at the weather strip (24) and allowing the lip portion (45) to be folded down.

7. The panel structure of the sunroof according to claim 6, wherein the lip portion (45) is folded down toward a vehicle outer side.
